# EUROPÄISCHE PATENTSCHRIFT

(11) **EP 3 530 504 B1**
(45) Veröffentlichungstag und Bekanntmachung des Hinweises auf die Patenterteilung: **05.08.2020**
(21) Anmeldenummer: 19155185.2
(22) Anmeldetag: 04.02.2019
(51) Int. Cl.: B60H 1/22, F23N 5/24, F23D 3/40

(54) **VERFAHREN ZUM BETREIBEN EINES BRENNSTOFFBETRIEBENEN FAHRZEUGHEIZGERÄTES**
METHOD FOR OPERATING A FUEL-DRIVEN VEHICLE HEATING DEVICE
PROCÉDÉ DE FONCTIONNEMENT D'UN APPAREIL DE CHAUFFAGE À COMBUSTIBLE POUR VÉHICULE

(30) Priorität: 26.02.2018 DE 102018104242
(43) Veröffentlichungstag der Anmeldung: 28.08.2019
(73) Patentinhaber: Eberspächer Climate Control Systems GmbH & Co. KG, 73730 Esslingen (DE)
(72) Erfinder: Blaschke, Walter, 73779 Deizisau (DE); Humburg, Michael, 73035 Göppingen (DE); Jensen, Hans, 73265 Dettingen (DE); Pfister, Wolfgang, 73732 Esslingen (DE)
(74) Vertreter: Ruttensperger Lachnit Trossin Gomoll

(56) Entgegenhaltungen:
- DE-A1- 10 143 459
- DE-A1-102011 052 324
- DE-A1-102016 104 142

## Beschreibung

Die vorliegende Erfindung betrifft ein Verfahren zum Betreiben eines brennstoffbetriebenen Fahrzeugheizgeräts.

Im Zuge der Bemühungen, den Rohölverbrauch zu mindern und den Schadstoffausstoß zu senken, werden zunehmend Versuche unternommen, auch synthetisch hergestellte Brennstoffe zum Betreiben von brennstoffbetriebenen Fahrzeugheizgeräten einzusetzen. Ein derartiger synthetischer Brennstoff ist beispielsweise OME (Oxymethylenether).

Ein Problem beim Einsatz derartiger Brennstoffe ist, dass diese einen anderen, im Allgemeinen einen geringeren Brennwert als herkömmliche Brennstoffe, wie zum Beispiel Diesel, aufweisen. Wird derartiger synthetischer Brennstoff verwendet oder einem herkömmlich verwendeten Brennstoff, wie zum Beispiel Diesel, beigemengt, kann dies zu dem Problem führen, dass bei einem Betrieb eines Fahrzeugheizgeräts auf der Grundlage von für herkömmliche Brennstoffe, wie zum Beispiel Diesel, vorgegebenen Betriebsparametern die mit einem dann erzeugten Gemisch aus Verbrennungsluft und Brennstoff durchgeführte Verbrennung einerseits zu einem übermäßigen Ausstoß von Schadstoffen führen kann, andererseits nicht die eigentlich für den Betrieb des Heizgeräts erwartete Heizleistung liefern kann. Grundlage dieser Problematik ist, dass für das Heizgerät im Allgemeinen keine unmittelbare Information über die Qualität des verwendeten Brennstoffs zur Verfügung steht bzw. gestellt werden kann. Auch besteht insbesondere bei Nachrüstsystemen mangels der Möglichkeit, einen den CO₂-Gehalt im Abgas erfassenden Sensor vorsehen zu können, im Allgemeinen nicht die Möglichkeit, die Qualität der ablaufenden Verbrennung durch Erfassung des CO₂-Gehalts im Abgas beurteilen zu können und beruhend darauf Kompensationsmaßnahmen in der Ansteuerung eines Verbrennungsluftgebläses bzw. einer Brennstoffpumpe vorzunehmen.

Aus der DE 101 43459 A1 ist ein Verfahren zum Betreiben eines brennstoffbetriebenen Fahrzeugheizgeräts bekannt, bei welchem Verbrennungsluft durch ein Verbrennungsluftgebläse und Brennstoff durch eine Brennstoffpumpe in eine Brennkammer eines Brennerbereichs des Fahrzeugheizgeräts gefördert werden. Ein Steuergerät steuert den Betrieb der Brennstoffpumpe und des Verbrennungsluftgebläses auf der Grundlage verschiedener von Sensoren bereitgestellter Informationen. Diese umfassen beispielsweise die Brennstofftemperatur, die Temperatur eines brennstoffführenden Teils, die Umgebungstemperatur sowie Information über den Brennstofftyp und die Brennstoffqualität.

Die DE 10 2011 052 324 A1 offenbart ein Verfahren zum Betreiben eines brennstoffbetriebenen Fahrzeugheizgeräts, bei welchem Verbrennungsluft durch ein Verbrennungsluftgebläse und Brennstoff durch eine Brennstoffpumpe in eine Brennkammer eines Brennerbereichs des Fahrzeugheizgeräts gefördert werden. Ein Steuergerät steuert den Betrieb der Brennstoffpumpe und des Verbrennungsluftgebläses. Durch ein elektrisches Heizelement kann der in eine Brennkammer einzuspeisende Brennstoff erwärmt werden, wenn das Fahrzeugheizgerät in der höchsten Heizleistungsstufe betrieben werden soll. Aufgrund der im Heizelement aufgenommenen Heizleistung wird bei diesem bekannten Verfahren auf die Art des zu verbrennenden Brennstoffs geschlossen, und beruhend auf der erfassten Brennstoffart wird ein Betriebsparametersatz für den Betrieb des Fahrzeugheizgeräts ausgewählt.

Die DE 10 2016 104 142 A1 offenbart ein Verfahren zum Betreiben eines brennstoffbetriebenen Fahrzeugheizgeräts, bei welchem Verbrennungsluft durch ein Verbrennungsluftgebläse und Brennstoff durch eine Brennstoffpumpe in eine Brennkammer eines Brennerbereichs des Fahrzeugheizgeräts gefördert werden. Ein Steuergerät steuert den Betrieb der Brennstoffpumpe und des Verbrennungsluftgebläses. Bei diesem bekannten Verfahren wird ein zum Zünden eines Gemisches aus Verbrennungsluft und Brennstoff vorgesehenes Zündorgan in einer Startphase, und es wird überwacht, ob innerhalb eines vorbestimmten Zeitfensters die Verbrennung gestartet wurde.

Es ist die Aufgabe der vorliegenden Erfindung, ein Verfahren zum Betreiben eines brennstoffbetriebenen Fahrzeugheizgeräts bereitzustellen, mit welchem in zuverlässiger Art und Weise auch bei Einsatz von Brennstoffen unterschiedlicher Qualität eine für den geforderten Betrieb des Heizgeräts erforderliche Heizleistung sichergestellt werden kann.

Erfindungsgemäß wird diese Aufgabe gelöst durch ein Verfahren zum Betreiben eines brennstoffbetriebenen Fahrzeugheizgeräts, wobei das Fahrzeugheizgerät einen Brennerbereich mit einer Brennkammer, eine Brennstoffpumpe zum Fördern von Brennstoff zu der Brennkammer und ein Verbrennungsluftgebläse zum Fördern von Verbrennungsluft zu der Brennkammer umfasst, wobei dem Verbrennungsluftgebläse ein Drucksensor zum Erfassen eines Fördergegendrucks stromabwärts des Verbrennungsluftgebläses zugeordnet ist, ferner umfassend eine Ansteueranordnung zum Ansteuern der Brennstoffpumpe derart, dass die Brennstoffpumpe mit einem vorgegebenen Wert einer Pumpenbetriebsgröße betrieben wird, und zum Ansteuern des Verbrennungsluftgebläses derart, dass das Verbrennungsluftgebläse mit einem vorgegebenen Wert einer Gebläsebetriebsgröße betrieben wird, bei welchem Verfahren in Zuordnung zu durch die Pumpenbetriebsgröße und die Gebläsebetriebsgröße definierten Förderbetriebszuständen und einem Referenz-Brennstoff Information zu einem jeweils zu erwartenden Fördergegendruck bereitgestellt wird, wobei das Verfahren ferner folgende Maßnahmen umfasst:
a) bei einem im Verbrennungsbetrieb eingestellten Förderbetriebszustand, Erfassen des Fördergegendrucks,
b) Vergleichen des erfassten Fördergegendrucks mit dem für den eingestellten Förderbetriebszustand zu erwartenden Fördergegendruck,
c) dann, wenn der erfasste Fördergegendruck von dem zu erwartenden Fördergegendruck abweicht, Verändern der Pumpenbetriebsgröße derart, dass der Fördergegendruck in Richtung zum erwarteten Förderdruck verändert wird oder/und im Wesentlichen dem erwarteten Fördergegendruck entspricht.

Mit dem erfindungsgemäßen Verfahren wird es möglich, im Verbrennungszustand auftretende und in Form eines veränderten Fördergegendrucks sich bemerkbar machende Änderungen in dem zu verbrennenden Brennstoff zu kompensieren und somit dafür zu sorgen, dass auch bei Einsatz von Brennstoffen verschiedener Qualität die für einen vorgegebenen Heizbetrieb erforderliche Heizleistung sichergestellt werden kann.

Das Verbrennungsluftgebläse kann ein drehbares Förderrad umfassen, wobei vorzugsweise die Gebläsebetriebsgröße einer Drehzahl des Förderrads entspricht. Weiter kann die Brennstoffpumpe einen periodisch hin- und herbewegbaren Pumpenkolben umfassen, wobei dann die Pumpenbetriebsgröße einer Bewegungsfrequenz des Pumpenkolbens entsprechen kann.

Ein Förderbetriebszustand kann definiert sein als ein Verhältnis von Drehzahl des Förderrads und Bewegungsfrequenz des Pumpenkolbens. Es ist in diesem dass in Zuordnung zu einem vorgegebenen Heizbetrieb der erwartete Fördergegendruck (P_{E}) als Führungsgröße vorgegeben wird und der erfasste Fördergegendruck (Pₑ) in einer Druckregelung als Regelgröße durch Verändern der Pumpenbetriebsgröße als Stellgröße in Richtung zu dem erwarteten Fördergegendruck (P_{E}) verändert wird.

Zusammenhang darauf hinzuweisen, dass abhängig davon, wie die Verarbeitung der zur Verfügung stehenden Informationen erfolgt, dieses Verhältnis definiert sein kann als Drehzahl/Bewegungsfrequenz oder definiert sein kann als Bewegungsfrequenz/Drehzahl.

Die erfindungsgemäß durchzuführende Prozedur kann im Rahmen einer Regelung des Fördergegendrucks ablaufen, bei welcher der erwartete Fördergegendruck als Führungsgröße verwendet wird und der erfasste Fördergegendruck die in Richtung zu dem erwarteten Fördergegendruck zu verstellen Regelgröße ist. Die dabei steuerungstechnisch beeinflusste Größe, also die Stellgröße, ist das Verhältnis von Drehzahl und Frequenz, wobei grundsätzlich die Drehzahl des Verbrennungsluftgebläses, also die geförderte Luftmenge, unverändert bleibt und die Frequenz, also die geförderte Brennstoffmenge, im Rahmen einer Regelschleife verändert bzw. angepasst wird.

Alternativ oder zusätzlich zu einer derartigen Regelung kann zur Kompensation von in einer Veränderung des Fördergegendrucks sich wiederspiegelnden Änderungen im Verbrennungsverhalten wird vorgeschlagen, dass bei der Maßnahme c) in Abhängigkeit von der Abweichung zwischen dem erfassten Fördergegendruck und dem erwarteten Fördergegendruck eine Korrekturgröße für den dem erwarteten Fördergegendruck zugeordneten Förderbetriebszustand ermittelt wird und die Pumpenbetriebsgröße derart verändert wird, dass ein um die Korrekturgröße korrigierter Förderbetriebszustand erhalten wird. Mit einer derartigen Maßnahme kann sichergestellt werden, dass der Fördergegendruck sehr schnell in Richtung zu dem gewünschten Wert, also dem erwarteten Fördergegendruck gebracht wird.

Insbesondere kann so vorgegangen werden, dass eine Abweichung zwischen dem dem erwarteten Fördergegendruck zugeordneten Verhältnis und dem dem erfassten Fördergegendruck zugeordneten Verhältnis ermittelt wird, dass ein von dem eingestellten Förderbetriebszustand mit dem gleichen Ausmaß der Abweichung, jedoch entgegengesetzter Abweichungsrichtung abweichender Förderbetriebszustand als korrigierter Förderbetriebszustand bestimmt wird, und dass zum Erhalt des korrigierten Förderbetriebszustands eine dem korrigierten Förderbetriebszustand bei im Wesentlichen unveränderter Gebläsebetriebsgröße zugeordnete Pumpenbetriebsgröße als veränderte Pumpenbetriebsgröße verwendet wird.

Eine Änderung im Verbrennungsverhalten bei an sich nicht geändertem Förderbetriebszustand kann beispielsweise auch induziert sein durch eine Änderung des Luftdrucks und somit eine Änderung der durch das Gebläse geförderten Sauerstoffmenge. Um beispielsweise eine derartige auf das Verbrennungsverhalten sich auswirkende Änderung der Umgebungsbedingungen von einem Zustand unterscheiden zu können, in welchem eine Änderung des Verbrennungsverhaltens durch den Einsatz eines anderen Brennstoffs ausgelöst wird, wird weiter vorgeschlagen, dass das Fahrzeugheizgerät einen Abgastemperatursensor zur Bereitstellung von Abgastemperaturinformation umfasst, und dass in Zuordnung zu einem Referenz-Förderbetriebszustand eine Referenz-Abgastemperatur und ein Referenz-Fördergegendruck bestimmt werden, und dass die Maßnahme c) dann durchgeführt wird, wenn bei eingestelltem Referenz-Förderbetriebszustand die erfasste Abgastemperatur und der erfasste Fördergegendruck in vorbestimmter Weise von der Referenz-Abgastemperatur und dem Referenz-Fördergegendruck abweichen.

Insbesondere kann dabei vorgesehen sein, dass die Maßnahme c) dann durchgeführt wird, wenn die erfasste Abgastemperatur unter der Referenz-Abgastemperatur liegt und der erfasste Fördergegendruck unter dem Referenz-Fördergegendruck liegt.

Die vorliegende Erfindung wird nachfolgend mit Bezug auf die beiliegenden Figuren detailliert beschrieben. Es zeigt:
- Fig. 1: ein brennstoffbetriebenes Fahrzeugheizgerät in prinzipieller Darstellung;
- Fig. 2: ein Diagramm, welches, aufgetragen über einem einen Förderbetriebszustand repräsentierenden Verhältnis Drehzahl/Frequenz, in Zuordnung zu verschiedenen Kraftstoffarten den sich bei der Verbrennung einstellenden CO₂-Gehalt im Abgas sowie den sich einstellenden Fördergegendruck darstellt;
- Fig. 3: ein Diagramm, welches für einen Referenz-Förderbetriebszustand die zu erwartende Abgastemperatur und den zu erwartenden Fördergegendruck darstellt.

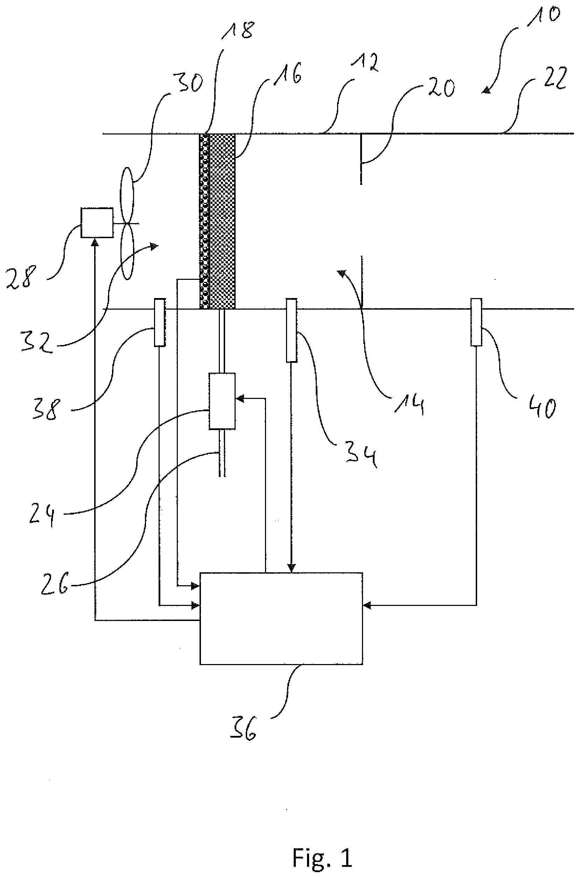

In Fig. 1 ist ein brennstoffbetriebenes Fahrzeugheizgerät allgemein mit 10 bezeichnet. Das Fahrzeugheizgerät 10 umfasst einen Brennerbereich 12 mit einer darin ausgebildeten Brennkammer 14. An einem Bodenbereich des Brennerbereichs 12 ist ein poröses Verdampfermedium 16, beispielsweise Metallvlies, Metallgeflecht, Schaumkeramik oder dergleichen, vorgesehen. Ferner kann am Bodenbereich eine elektrisch erregbare Heizeinrichtung 18 vorgesehen sein, welche insbesondere in der Startphase des Verbrennungsbetriebs eine Abdampfung von Brennstoff aus dem porösen Verdampfermedium 16 unterstützen kann. Die Brennkammer 14 ist im Wesentlichen durch eine Flammblende 20 begrenzt. In einem Flammrohr 22 strömen die bei der Verbrennung generierten Verbrennungsabgase in Richtung auf eine Wärmetauscheranordnung zu, in welcher in den Verbrennungsabgasen transportierte Wärme auf ein zu erwärmendes Medium, beispielsweise Luft oder Wasser, übertragen werden kann.

Den für die Verbrennung erforderlichen Brennstoff fördert eine Brennstoffpumpe 24, beispielsweise eine mit einem periodisch hin- und herbewegbaren Pumpenkolben aufgebaute Dosierpumpe, aus einem nicht dargestellten Brennstoffspeicher über eine Brennstoffleitung 26 in das poröse Verdampfermedium 16. Der flüssige Brennstoff verteilt sich in dem Verdampfermedium 16 durch Kapillarförderwirkung und wird an dessen der Brennkammer 14 zugewandter Seite zur Brennkammer 14 hin abgedampft.

Die für die Verbrennung erforderliche Luft fördert ein allgemein mit 28 bezeichnetes Verbrennungsluftgebläse vermittels eines zur Drehung angetriebenen Förderrads 30 in ein allgemein auch als Plenum bezeichnetes Volumen 32 stromaufwärts der Brennkammer 14. Über in einer die Brennkammer 14 umgebenden Umfangswandung der Brennkammerbaugruppe 12 oder/und in einem am Bodenbereich vorgesehenen Verbrennungslufteintrittsstutzen vorgesehene oder sonstige den Eintritt von Luft in die Brennkammer 14 zulassende Öffnungen strömt die vom Verbrennungsluftgebläse 28 geförderte Verbrennungsluft in die Brennkammer 14 ein und mischt sich dort mit dem Brennstoffdampf. Das so generierte Gemisch aus Verbrennungsluft und Brennstoffdampf kann am Beginn des Verbrennungsbetriebs durch ein Zündorgan 34, beispielsweise Glühstift, gezündet werden.

Die Brennstoffpumpe 24, das Verbrennungsluftgebläse 28, die Heizeinrichtung 18 und das Zündorgan 34 stehen unter der Ansteuerung einer allgemein mit 36 bezeichneten Ansteueranordnung. Entsprechend dem für das Heizgerät 10 vorgegebenen Verbrennungsbetrieb bzw. der geforderten Heizleistung steuert die Ansteueranordnung 36 die Brennstoffpumpe 24 und das Verbrennungsluftgebläse 28 derart an, dass ein verbrennungsfähiges Gemisch aus Verbrennungsluft und Brennstoff im gewünschten Mischungsverhältnis und mit der erforderlichen Menge in der Brennkammer 14 zur Verbrennung bereitgestellt wird. Dabei kann in Zuordnung zu einer geforderten Heizleistung ein Förderbetriebszustand definiert sein unter Verwendung der Drehzahl des Förderrads 30 als Gebläsebetriebsgröße und der Bewegungsfrequenz eines Pumpenkolbens der Brennstoffpumpe 24 als Pumpenbetriebsgröße. Insbesondere kann ein derartiger Förderbetriebszustand definiert sein als das Verhältnis der Drehzahl zur Bewegungsfrequenz. Für jede im Heizbetrieb geforderte Heizleistung bzw. einen entsprechenden Förderbetriebszustand können somit eine vorbestimmte Drehzahl und eine entsprechend vorbestimmte Bewegungsfrequenz vorgegeben bzw. beispielsweise in Form einer Tabelle oder eines Kennfelds in der Ansteueranordnung 36 hinterlegt werden. Soll eine bestimmte Heizleistung abgerufen werden, werden die Brennstoffpumpe 24 und das Verbrennungsluftgebläse 28 so angesteuert, dass sie mit der dieser Heizleistung bzw. dem entsprechenden Förderbetriebszustand zugeordneten Drehzahl bzw. Bewegungsfrequenz betrieben werden. Hier kann beispielsweise eine Regelung der Drehzahl bzw. der Bewegungsfrequenz erfolgen. Eine unmittelbare Erfassung der geförderten Luftmenge oder der geförderten Brennstoffmenge erfolgt im Allgemeinen nicht. Auch steht im Allgemeinen keine Information darüber zur Verfügung, welche Art von Brennstoff zur Verbrennung eingesetzt wird.

Dem Heizgerät 10 ist ein Drucksensor 38 zugeordnet. Dieser ist stromabwärts des Verbrennungsluftgebläses 28 angeordnet, beispielsweise im Volumen 32, und erfasst somit den Fördergegendruck, also den Druck, gegen welchen das Verbrennungsluftgebläse 28 fördert. Ein Temperatursensor 40, der beispielsweise im Bereich des Flammenrohrs 22 oder noch weiter stromabwärts vorgesehen sein kann, grundsätzlich aber auch im Bereich der Brennkammer 14 vorgesehen sein kann, erfasst die Temperatur von die Brennkammer 14 verlassendem Abgas. Sowohl die Abgastemperatur, als auch der Fördergegendruck sind Parameter, die im Zusammenhang stehen mit der ablaufenden Verbrennung. Je mehr Brennstoff verbrannt wird, desto größer ist die bei der Verbrennung entstehende Abgasmenge und desto größer ist der Druck, gegen welchen das Verbrennungsluftgebläse 28 fördern muss. Je mehr Brennstoff verbrannt wird, desto größer ist die bei der Verbrennung freigesetzte Energiemenge und desto höher wird die Abgastemperatur sein.

Auch die Qualität des zu verbrennenden Brennstoffs beeinflusst die durch die Sensoren 38, 40 erfassten Parameter. Bei Verbrennung eines hochwertigen Brennstoffs, wie zum Beispiel Diesel, wird pro verbrannte Mengeneinheit des Brennstoffs eine größere Energiemenge freigesetzt, was zu einem entsprechend größeren Abgasvolumen und Fördergegendruck und auch einer entsprechend höheren Abgastemperatur führt. Ein Brennstoff geringerer Qualität, wie zum Beispiel OME, hat bei gleicher geförderter Brennstoffmenge die Freisetzung einer geringeren Energiemenge und dementsprechend eine niedrigere Abgastemperatur sowie einen niedrigeren Fördergegendruck zur Folge. Dies nutzt die vorliegende Erfindung, um in der nachfolgend beschriebenen Art und Weise im Verbrennungsbetrieb Korrekturmaßnahmen vorzunehmen, welche gewährleisten, dass der Einsatz von Brennstoffen unterschiedlicher Qualität nicht zur Folge hat, dass eine für einen einzustellenden Verbrennungsbetrieb geforderte Heizleistung nicht erreicht wird, obgleich die in Zuordnung zu dieser Heizleistung vorgegebene Menge an Brennstoff und die entsprechend zugeordnete Menge an Verbrennungsluft in die Brennkammer 14 gefördert werden.

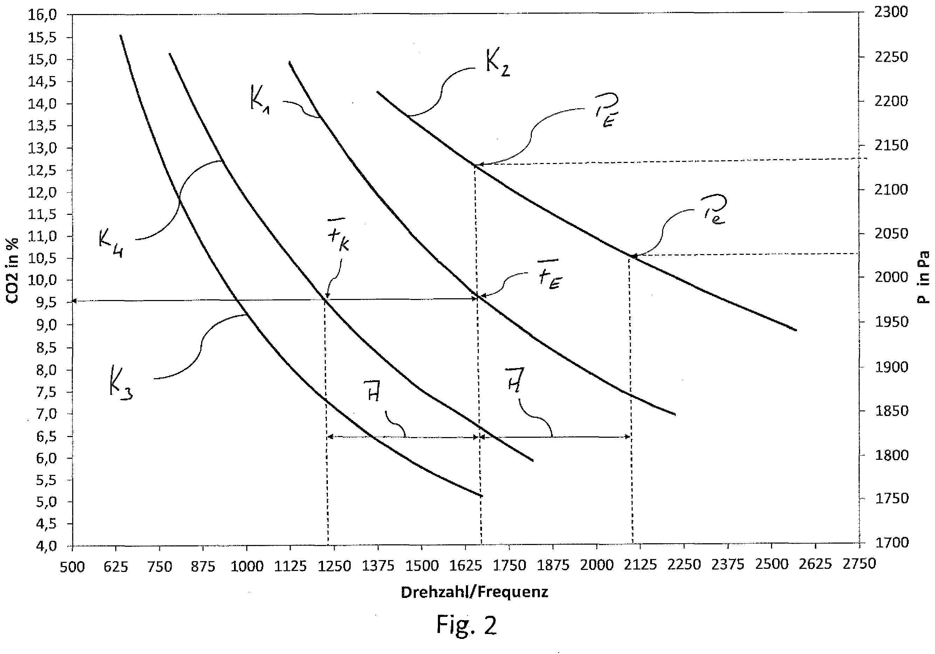

Die Fig. 2 zeigt anhand der Kurve K₁ für einen Referenz-Brennstoff, also beispielsweise Diesel, den Zusammenhang zwischen einem Förderbetriebszustand und dem CO₂-Gehalt im Abgas. Der Förderbetriebszustand ist definiert durch das Verhältnis zwischen einer durch die Drehzahl des Förderrads 30 repräsentierten Gebläsebetriebsgröße und einer durch die Bewegungsfrequenz eines Pumpenkolbens der Brennstoffpumpe 24 repräsentierten Pumpenbetriebsgröße. Insbesondere ist der Förderbetriebszustand definiert durch ein Drehzahl/Frequenz-Verhältnis. Um einen CO₂-Gehalt von etwa 9,5 bis 9,6 % zu erreichen, wird ein Förderbetriebszustand eingestellt, bei welchem das Drehzahl/Frequenz-Verhältnis bei etwa 1670 liegt. Unter der Annahme, dass mit diesem Förderbetriebszustand F_{E} gearbeitet wird, ist bei Einsatz von Diesel als Brennstoff zu erwarten, dass bei der dann ablaufenden Verbrennung sich ein Fördergegendruck P_{E} von etwa 2135 Pa einstellt. Es ist darauf hinzuweisen, dass in Zuordnung zur Kurve K₁ die Kurve K₂ den für einen jeweiligen Förderbetriebszustand zu erwartenden Fördergegendruck repräsentiert.

Die Kurve K₃ repräsentiert für verschiedene Förderbetriebszustände, also verschiedene Drehzahl/Frequenz-Verhältnisse, den im Abgas jeweils enthaltenen CO₂-Anteil für einen Alternativbrennstoff, beispielsweise OME. Da dieser Alternativbrennstoff einen deutlich geringeren Brennwert hat als Diesel, führt die Verbrennung der gleichen Brennstoffmenge, also das Arbeiten mit gleichem Drehzahl/Frequenz-Verhältnis, zu einem geringeren CO₂-Gehalt im Abgas. Um den gleichen Verbrennungszustand zu erreichen, also auch die gleiche Heizleistung freisetzen zu können, was letztendlich bedeutet, dass auch der CO₂-Gehalt im gleichen Bereich liegt, beispielsweise bei etwa 9,5 bis 9,6 %, müsste bei Einsatz von OME als Brennstoff mit einem deutlich höheren Brennstoffgehalt im Gemisch gearbeitet werden, was letztendlich einen durch ein deutlich geringeres Drehzahl/Frequenz-Verhältnis von etwa 890 repräsentierten Förderbetriebszustand bedeuten würde.

Es sei nun angenommen, dass das Fahrzeugheizgerät 10 mit einem Brennstoff nicht bekannter Qualität in einem den Förderbetriebszustand F_{E} entsprechenden Förderbetriebszustand betrieben wird. Wie bereits ausgeführt, würde für den Referenz-Brennstoff Diesel der erwartete Fördergegendruck P_{E} bei etwa 2135 Pa liegen. Es wird jedoch tatsächlich festgestellt, dass der erfasste Förderdruck Pₑ bei nur etwa 2030 Pa liegt. Bei unveränderter Gebläsebetriebsgröße, also Drehzahl, und unveränderter Pumpenbetriebsgröße, also Bewegungsfrequenz, kann grundsätzlich davon ausgegangen werden, dass ein derartiger unter dem erwarteten Fördergegendruck P_{E} liegender erfasster Förderdruck Pₑ auf den Einsatz eines Brennstoffs mit geringerem Brennwert zurückzuführen ist.

Um, ohne über die Qualität des tatsächlich eingesetzten Brennstoffs detailliert Kenntnis zu haben, dafür sorgen zu können, dass die Verbrennung wieder derart abläuft, dass für einen bestimmten einzustellenden Betriebszustand die erforderliche Heizleistung erzeugt wird, wird zunächst die Abweichung A zwischen dem dem erwarteten Fördergegendruck P_{E} zugeordneten Förderbetriebszustand und dem dem erfassten Fördergegendruck Pₑ zugeordneten Förderbetriebszustand ermittelt. Ausgehend von dem eingestellten Förderbetriebszahlstand F_{E} wird dann ein korrigierter Förderbetriebszustand F_{K} dadurch ermittelt, dass von dem Förderbetriebszustand F_{E} mit der zuvor ermittelten Abweichung A jedoch in entgegengesetzter Richtung abgewichen wird. Das heißt, während der erfasste Fördergegendruck P_{E} das Vorliegen eines um die Abweichung A über dem eingestellten Förderbetriebszustand F_{E} liegenden fiktiven Förderbetriebszustand impliziert, bedeutet der im vorangehend beschriebenen Sinne korrigierte Förderbetriebszustand F_{K} das Arbeiten mit einem in entsprechendem Ausmaß erhöhten Brennstoffanteil im Luft/Brennstoff-Gemisch. Das führt dazu, dass bei Einsatz eines Brennstoffs, dessen Förderbetriebszustand-CO₂-Gehalt-Zusammenhang durch die Kurve K₄ repräsentiert ist, aufgrund der erhöhten Brennstoffmenge bei unverändert belassener Luftmenge wiederum ein CO₂-Gehalt von etwa 9,5 bis 9,6 % erreicht wird, was letztendlich bedeutet, dass das Heizgerät 10 wieder mit der für einen bestimmten Betriebszustand vorgegebenen Heizleistung betrieben werden kann. Die vorangehend erläuterte Korrektur basiert dabei auf der Annahme, dass die verschiedenen in Fig. 2 dargestellten Kurven zumindest für kleinere Abweichungen näherungsweise jeweils als lineare Verläufe interpretiert werden können.

Mit der vorangehend beschriebenen Prozedur kann nach Art einer Steuerung der Fördergegendruck, sehr schnell in Richtung zu dem erwarteten Fördergegendruck gebracht werden, wenn ein anderer Brennstoff als der Referenz-Brennstoff eingesetzt wird. Da ein klarer Zusammenhang zwischen dem Fördergegendruck und der Qualität der ablaufenden Verbrennung und somit der Heizleistung besteht, wird somit gewährleistet, dass, obgleich keine unmittelbare Kenntnis über den tatsächlich eingesetzten Brennstoff besteht, die geforderte Heizleistung für einen vorgegebenen Heizbetrieb erreicht wird. Alternativ oder zusätzlich kann das Bereitstellen dieser geforderten Heizleistung, also das Einstellen des dieser Heizleistung zugeordneten Fördergegendrucks, auch im Rahmen einer Regelschleife erfolgen. Der für eine einzustellende Heizleistung zu erwartende Fördergegendruck bildet als Sollwert die Führungsgröße in der Regelschleife, während der erfasste Fördergegendruck als Istwert die Regelgröße bildet. Als Stellgröße beeinflusst wird die Menge des geförderten Brennstoffs, also z. B. die Frequenz, mit welcher ein Pumpenkolben der Brennstoffpumpe bewegt wird. Vermittels einer derartigen beispielsweise als Proportionalregelung ablaufenden Regelung kann gleichermaßen dafür gesorgt werden, dass, ohne Detailkenntnis über den tatsächlich eingesetzten Brennstoff zu haben, durch das Einregeln des Fördergegendrucks auf den erwarteten Fördergegendruck auch die geforderte Heizleistung bereitgestellt werden kann. Eine derartige Regelung des Fördergegendrucks kann beispielsweise auch in Verbindung mit der vorangehend mit Bezug auf die Fig. 2 beschriebenen Prozedur erfolgen. Dabei kann zunächst unter Verwendung der vorangehend beschriebenen Prozedur mit einem einzigen Korrekturschritt der Förderbetriebszustand derart verändert werden, dass angenommen werden kann, dass der dann sich einstellende Fördergegendruck bereits dem erwarteten Fördergegendruck entspricht bzw. sehr nahe daran ist. Ist diese Korrektur einmal durchgeführt worden, kann dann im Rahmen einer feinfühligen Regelschleife dafür gesorgt werden, dass eine möglicherweise auch noch vorhandene geringe Abweichung zwischen dem erfassten Fördergegendruck, also der Regelgröße, und dem erwarteten Fördergegendruck, also der Führungsgröße, im Wesentlichen vollständig eliminiert wird.

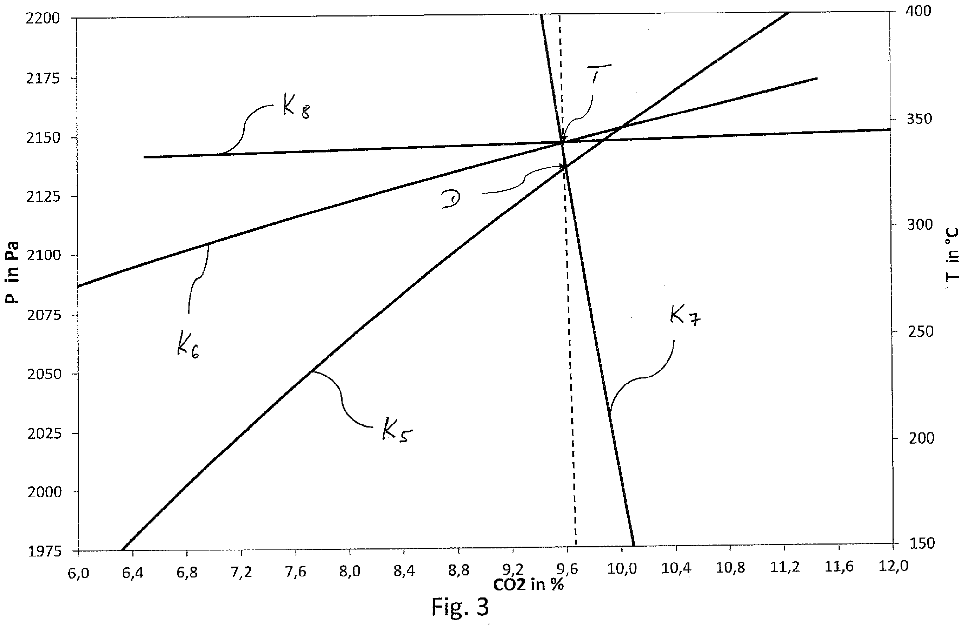

Wie vorangehend dargelegt, wird die beschriebene Korrektur insbesondere dann durchgeführt, wenn erkannt wird, dass der in Zuordnung zu einem eingestellten Förderbetriebszustand erfasste Fördergegendruck nicht dem für diesen Förderbetriebszustand zu erwartenden Fördergegendruck entspricht. Dies kann und wird in aller Regel, muss jedoch nicht zwingend ausgelöst sein durch den Einsatz eines Brennstoffs mit anderer Qualität. Die Fig. 3 zeigt für einen definierten Betriebszustand des Heizgeräts 10, bei welchem dieses mit einem diesem Betriebszustand zugeordneten Förderbetriebszustand derart betrieben wird, dass ein CO₂-Gehalt von etwas über 9,6 % zu erwarten ist, durch einen Druckpunkt D und einen Temperaturpunkt T repräsentierte zu erwartende Werte für den Fördergegendruck und die Abgastemperatur. Für diesen definierten Betriebszustand bzw. den diesem zugeordneten Förderbetriebszustand liegt der zu erwartende Fördergegendruck bei etwa 2135 Pa und die zu erwartende Abgastemperatur liegt bei etwa 340 °C. Wird, ausgehend von diesem definierten Betriebszustand, ein anderer Brennstoff eingesetzt, also beispielsweise ein Brennstoff mit höherem OME-Gehalt und damit entsprechend geringerem Brennwert, so nimmt bei unveränderter Verbrennungsluftfördermenge der Fördergegendruck entlang einer Kurve K₅ ab. Aufgrund der mit zunehmendem OME-Anteil im Brennstoff abnehmenden Qualität bzw. dementsprechend abnehmendem Heizwert, wird die Verbrennung zu einem geringeren CO₂-Gehalt im Abgas führen. Entsprechend nimmt die Abgastemperatur ausgehend vom Temperaturpunkt T entlang einer Kurve K₆ ab. Dies bedeutet, dass dann, wenn Fördergegendruck und Temperatur ausgehend von den für einen Referenz-Förderbetriebszustand vorgegebenen Referenz-Fördergegendruck, welcher dem Druckpunkt T entspricht und einer Referenz-Abgastemperatur, welche dem Temperaturpunkt T entspricht, abnehmen, ist dies ein klarer Hinweis darauf, dass Brennstoff mit geringerem Heizwert als der Referenz-Brennstoff, also beispielsweise Diesel, eingesetzt wird und dementsprechend die vorangehend mit Bezug auf die Fig. 2 beschriebene Korrektur durchgeführt werden kann. Hier kann beispielsweise sowohl in Zuordnung zur Abgastemperatur, als auch in Zuordnung zum Fördergegendruck eine jeweilige Schwelle gesetzt werden, deren Überschreiten bzw. Unterschreiten im dargestellten Falle, als Kriterium dafür genutzt wird, dass die in Fig. 2 dargestellte Korrektur des Förderbetriebszustands vorgenommen wird.

Die Abnahme des Fördergegendrucks kann jedoch auch indiziert sein durch einen abnehmenden Luftdruck und somit einem geringeren Sauerstoffanteil pro geförderter Luftmengeneinheit. Dies kann beispielsweise dann der Fall sein, wenn Wetteränderungen zu einer Luftdruckänderung führen oder ein Fahrzeug in verschiedenen Höhen betrieben wird. Die bei einer derartigen Veränderung des Sauerstoffgehalts in der Luft sich einstellende Änderung des Fördergegendrucks ist durch die Kurve K₇ repräsentiert. Die Kurve K₇ zeigt, dass bei abnehmendem Sauerstoffgehalt und dementsprechender Verschiebung des zu verbrennenden Gemisches in Richtung fetteres Gemisch und somit zunehmendem CO₂-Gehalt im Abgas der Fördergegendruck stark abfällt. Gleichzeitig bleibt jedoch die für diesen Fall durch die Kurve K₈ repräsentierte Änderung der Temperatur gering. Eine Änderung des Sauerstoffgehalts in der Luft führt somit zu nahezu keiner Änderung der Abgastemperatur, bzw. nur einem geringen Anstieg der Abgastemperatur, während der Fördergegendruck stark abfällt. Werden also für die vorangehend dargelegte Entscheidung als Kriterien das Unterschreiten einer Schwelle für die Abgastemperatur und das Unterschreiten einer Schwelle für den Fördergegendruck vorgegeben, so würde in diesem Falle zwar der Fördergegendruck die zugeordnete Schwelle unterschreiten, im Falle der Abgastemperatur könnte ein derartiges Unterschreiten jedoch nicht beobachtet werden, da die Abgastemperatur nahezu gleich bleibt bzw. geringfügig ansteigt. In diesem Falle kann darauf geschlossen werden, dass ein absenkender Fördergegendruck nicht induziert ist durch eine veränderte Zusammensetzung des Kraftstoffs und insofern die vorangehend mit Bezug auf die Fig. 2 beschriebene Korrektur des Förderbetriebszustands nicht vorgenommen werden muss. Es können in diesem Falle andere, den veränderten Luftdruck kompensierende Korrekturmaßnahmen eingeleitet werden.

Grundsätzlich könnte aus dem in Fig. 3 dargestellten Zusammenhang alternativ oder zusätzlich zur Auswertung der Druck- und Temperaturwerte auch der jeweilige Gradient der sich einstellenden Abweichungen vom Druckpunkt D bzw. Temperaturpunkt T berücksichtigt werden.

## Patentansprüche

1. Verfahren zum Betreiben eines brennstoffbetriebenen Fahrzeugheizgeräts, wobei das Fahrzeugheizgerät (10) einen Brennerbereich (12) mit einer Brennkammer (14), eine Brennstoffpumpe (24) zum Fördern von Brennstoff zu der Brennkammer (14) und ein Verbrennungsluftgebläse (28) zum Fördern von Verbrennungsluft zu der Brennkammer (14) umfasst, wobei dem Verbrennungsluftgebläse (28) ein Drucksensor (38) zum Erfassen eines Fördergegendrucks stromabwärts des Verbrennungsluftgebläses (28) zugeordnet ist, ferner umfassend eine Ansteueranordnung (36) zum Ansteuern der Brennstoffpumpe (24) derart, dass die Brennstoffpumpe (24) mit einem vorgegebenen Wert einer Pumpenbetriebsgröße betrieben wird, und zum Ansteuern des Verbrennungsluftgebläses (28) derart, dass das Verbrennungsluftgebläse (28) mit einem vorgegebenen Wert einer Gebläsebetriebsgröße betrieben wird, bei welchem Verfahren in Zuordnung zu durch die Pumpenbetriebsgröße und die Gebläsebetriebsgröße definierten Förderbetriebszuständen und einem Referenz-Brennstoff Information zu einem jeweils zu erwartenden Fördergegendruck bereitgestellt wird, wobei das Verfahren ferner folgende Maßnahmen umfasst:
a) bei einem im Verbrennungsbetrieb eingestellten Förderbetriebszustand, Erfassen des Fördergegendrucks,
b) Vergleichen des erfassten Fördergegendrucks (Pₑ) mit dem für den eingestellten Förderbetriebszustand zu erwartenden Fördergegendruck (P_{E}),
c) dann, wenn der erfasste Fördergegendruck (Pₑ) von dem zu erwartenden Fördergegendruck (P_{E}) abweicht, Verändern der Pumpenbetriebsgröße derart, dass der Fördergegendruck in Richtung zum erwarteten Förderdruck (P_{E}) verändert wird oder/und im Wesentlichen dem erwarteten Fördergegendruck (P_{E}) entspricht.

2. Verfahren nach Anspruch 1, **dadurch gekennzeichnet, dass** das Verbrennungsluftgebläse (28) ein drehbares Förderrad (30) umfasst, wobei die Gebläsebetriebsgröße einer Drehzahl des Förderrads (30) entspricht, oder/und dass die Brennstoffpumpe (24) einen periodisch hin- und herbewegbaren Pumpenkolben umfasst, wobei die Pumpenbetriebsgröße einer Bewegungsfrequenz des Pumpenkolbens entspricht.

3. Verfahren nach Anspruch 2, **dadurch gekennzeichnet, dass** ein Förderbetriebszustand definiert ist als ein Verhältnis von Drehzahl des Förderrads (30) und Bewegungsfrequenz des Pumpenkolbens.

4. Verfahren nach einem der vorangehenden Ansprüche, **dadurch gekennzeichnet, dass** bei der Maßnahme c) in Abhängigkeit von der Abweichung zwischen dem erfassten Fördergegendruck (Pₑ) und dem erwarteten Fördergegendruck (P_{E}) eine Korrekturgröße für den dem erwarteten Fördergegendruck (P_{E}) zugeordneten Förderbetriebszustand (F_{E}) ermittelt wird und die Pumpenbetriebsgröße derart verändert wird, dass ein um die Korrekturgröße korrigierter Förderbetriebszustand (F_{K}) erhalten wird.

5. Verfahren nach Anspruch 3 und Anspruch 4, **dadurch gekennzeichnet, dass** eine Abweichung (A) zwischen dem dem erwarteten Fördergegendruck (P_{E}) zugeordneten Verhältnis und dem dem erfassten Fördergegendruck (Pₑ) zugeordneten Verhältnis ermittelt wird, dass ein von dem eingestellten Förderbetriebszustand (F_{E}) mit dem gleichen Ausmaß der Abweichung (A), jedoch entgegengesetzter Abweichungsrichtung abweichender Förderbetriebszustand als korrigierter Förderbetriebszustand (F_{K}) bestimmt wird, und dass zum Erhalt des korrigierten Förderbetriebszustands (F_{K}) eine dem korrigierten Förderbetriebszustand bei im Wesentlichen unveränderter Gebläsebetriebsgröße zugeordnete Pumpenbetriebsgröße als veränderte Pumpenbetriebsgröße verwendet wird.

6. Verfahren nach einem der vorangehenden Ansprüche, **dadurch gekennzeichnet, dass** in Zuordnung zu einem vorgegebenen Heizbetrieb der erwartete Fördergegendruck (P_{E}) als Führungsgröße vorgegeben wird und der erfasste Fördergegendruck (Pₑ) in einer Druckregelung als Regelgröße durch Verändern der Pumpenbetriebsgröße als Stellgröße in Richtung zu dem erwarteten Fördergegendruck (P_{E}) verändert wird.

7. Verfahren nach einem der vorangehenden Ansprüche, **dadurch gekennzeichnet, dass** das Fahrzeugheizgerät (10) einen Abgastemperatursensor (40) zur Bereitstellung von Abgastemperaturinformation umfasst, und dass in Zuordnung zu einem Referenz-Förderbetriebszustand eine Referenz-Abgastemperatur (T) und ein Referenz-Fördergegendruck (D) bestimmt werden, und dass die Maßnahme c) dann durchgeführt wird, wenn bei eingestelltem Referenz-Förderbetriebszustand die erfasste Abgastemperatur und der erfasste Fördergegendruck in vorbestimmter Weise von der Referenz-Abgastemperatur (T) und dem Referenz-Fördergegendruck (D) abweichen.

8. Verfahren nach Anspruch 7, **dadurch gekennzeichnet, dass** die Maßnahme c) dann durchgeführt wird, wenn die erfasste Abgastemperatur unter der Referenz-Abgastemperatur (T) liegt und der erfasste Fördergegendruck unter dem Referenz-Fördergegendruck (D) liegt.

## Claims

1. Process for operating a fuel-operated vehicle heater, the vehicle heater (10) comprising a burner area (12) with a combustion chamber (14); a fuel pump (24) for feeding fuel to the combustion chamber (14); and a combustion air blower (28) for feeding combustion air to the combustion chamber (14), a pressure sensor (38) being associated with the combustion air blower (28) for detecting a feed back pressure downstream of the combustion air blower (28); further comprising an actuating unit (36) for actuating the fuel pump (24) such that the fuel pump (24) is operated with a predefined value of a pump operating variable, and for actuating the combustion air blower (28) such that the combustion air blower (28) is operated with a predefined value of a blower operating variable, in which process associated with feed operating states and with a reference fuel defined by the pump operating variable and the blower operating variable, information on a feed back pressure to be expected in each case is provided, wherein the process further comprises the following steps:
a) detection of the feed back pressure in case of a feed operating state set during the combustion operation,
b) comparison of the detected feed back pressure (Pₑ) with the feed back pressure (P_{E}) to be expected for the set feed operating state,
c) if the detected feed back pressure (Pₑ) deviates from the feed back pressure (P_{E}) to be expected, changing the pump operating variable such that the feed back pressure changes in the direction toward the expected feed pressure or/and essentially corresponds to the expected feed back pressure (P_{E}).

2. Process in accordance with claim 1, **characterized in that** the combustion air blower (28) comprises a rotatable feed wheel (30), wherein the blower operating variable corresponds to a speed of the feed wheel (30), or/and that the fuel pump (24) comprises a pump piston with periodic reciprocating motion, wherein the pump operating variable corresponds to a rate of motion of the pump piston.

3. Process in accordance with claim 2, **characterized in that** a feed operating state is defined as a ratio of the speed of the feed wheel (30) to the rate of motion of the pump piston.

4. Process in accordance with one of the preceding claims, **characterized in that** a correction variable for the feed operating state (F_{E}) associated with the expected feed back pressure (P_{E}) is determined in step c) as a function of the deviation between the detected feed back pressure (Pₑ) and the expected feed back pressure (P_{E}), and the pump operating variable is changed such that a feed operating state (F_{K}) corrected by the correction variable is obtained.

5. Process in accordance with claim 3 and claim 4, **characterized in that** a deviation (A) between the ratio associated with the expected feed back pressure (P_{E}) and the ratio associated with the detected feed back pressure (Pₑ) is determined, that a feed operating state deviating from the set feed operating state (F_{E}) to the same extent as the deviation (A) but in the opposite direction of deviation is determined as the corrected feed operating state (F_{K}), and that a pump operating variable associated with the corrected feed operating state with the blower operating variable being essentially unchanged is used as the changed pump operating variable to obtain the corrected feed operating state (F_{K}).

6. Process in accordance with one of the preceding claims, **characterized in that** the expected feed back pressure (P_{E}) is predefined as a command variable in association with a predefined heating operation, and the detected feed back pressure (Pₑ) is changed in a pressure control as a control variable by changing the pump operating variable as manipulated variable in the direction toward the expected feed back pressure (P_{E}).

7. Process in accordance with one of the preceding claims, **characterized in that** the vehicle heater (10) comprises a waste gas temperature sensor (40) for providing information about the waste gas temperature, and that a reference waste gas temperature (T) and a reference feed back pressure (D) are determined in association with a reference feed operating state, and that step c) is carried out if the detected waste gas temperature and the detected feed back pressure deviate in a predefined manner from the reference waste gas temperature (T) and from the reference feed back pressure (D) in case of a set reference feed operating state.

8. Process in accordance with claim 7, **characterized in that** step c) is carried out if the detected waste gas temperature is below the reference waste gas temperature (T) and the detected feed back pressure is below the reference feed back pressure (D).

## Revendications

1. Procédé pour opérer un chauffage de véhicule fonctionnant au carburant, le chauffage de véhicule (10) comprenant une zone de brûleur (12) avec une chambre de combustion (14), une pompe à carburant (24) pour alimenter la chambre de combustion (14) en carburant et une soufflante d'air de combustion (28) pour alimenter la chambre de combustion (14) en air de combustion, un capteur de pression (38) étant associé à la soufflante d'air de combustion (28) pour détecter une pression de rétroaction de la soufflante d'air de combustion (28) ; comprenant en outre une unité de commande (36) pour commander la pompe à carburant (24) de telle sorte que la pompe à carburant (24) fonctionne avec une valeur prédéfinie d'un paramètre de fonctionnement de la pompe, et pour commander la soufflante d'air de combustion (28) de telle sorte que la soufflante d'air de combustion (28) fonctionne avec une valeur prédéfinie d'un paramètre de fonctionnement de la soufflante, dans lequel procédé, associé à des états de fonctionnement d'alimentation définis par le paramètre de fonctionnement de la pompe et le paramètre de fonctionnement de la soufflante, et à un carburant de référence des informations sur une pression de rétroaction attendue dans chaque cas sont fournies, dans lequel le procédé comprend en outre les étapes suivantes :
a) détection de la pression de rétroaction dans le cas d'un état de fonctionnement d'alimentation réglé pendant l'opération de combustion,
b) comparaison de la pression de rétroaction détectée (Pₑ) avec la pression de rétroaction (P_{E}) attendue pour l'état de fonctionnement d'alimentation réglé,
c) si la pression de rétroaction détectée (Pₑ) s'écarte de la pression de rétroaction (PE) attendue, modification de le paramètre de fonctionnement de la pompe de telle sorte que la pression de rétroaction change dans le sens de la pression d'alimentation attendue et/ou correspond essentiellement à la pression de rétroaction (P_{E}) attendue.

2. Procédé selon la revendication 1, **caractérisé en ce que** la soufflante d'air de combustion (28) comprend une roue d'alimentation rotative (30), dans lequel le paramètre de fonctionnement de la soufflante correspond à une vitesse de la roue d'alimentation (30), et/ou **en ce que** la pompe à carburant (24) comprend un piston de pompe avec un mouvement alternatif périodique, dans lequel le paramètre de fonctionnement de la pompe correspond à une vitesse de mouvement du piston de pompe.

3. Procédé selon la revendication 2, **caractérisé en ce qu'**un état de fonctionnement d'alimentation est défini comme un rapport entre la vitesse de la roue d'alimentation (30) et la vitesse de déplacement du piston de pompe.

4. Procédé selon l'une des revendications précédentes, **caractérisé en ce qu'**un paramètre de correction pour l'état de fonctionnement d'alimentation (F_{E}) associé à la pression de rétroaction attendue (P_{E}) est déterminée à l'étape c) en fonction de l'écart entre la pression de rétroaction détectée (Pₑ) et la pression de rétroaction attendue (P_{E}), et le paramètre de fonctionnement de la pompe est modifié de telle sorte qu'un état de fonctionnement d'alimentation (F_{K}) corrigé par la grandeur de correction est obtenu.

5. Procédé selon la revendication 3 et la revendication 4, **caractérisé en ce qu'**un écart (A) entre le rapport associé à la pression de rétroaction attendue (P_{E}) et le rapport associé à la pression de rétroaction détectée (Pₑ) est déterminé, **en ce qu'**un état de fonctionnement d'alimentation s'écartant de l'état de fonctionnement d'alimentation réglé (F_{E}) dans la même mesure que l'écart (A) mais dans une direction opposée d'écart est déterminé comme étant l'état de fonctionnement de l'alimentation corrigé (F_{K}), et qu'un paramètre de fonctionnement de la pompe associée à l'état de fonctionnement corrigé d'alimentation, le paramètre de fonctionnement de la soufflante étant essentiellement inchangée, est utilisée comme paramètre de fonctionnement modifiée de la pompe pour obtenir l'état de fonctionnement corrigé d'alimentation (F_{K}).

6. Procédé selon l'une des revendications précédentes, **caractérisé en ce que** la pression de rétroaction attendue (P_{E}) est prédéfinie en tant que paramètre de commande en association avec une opération de chauffage prédéfinie, et la pression de rétroaction détectée (Pₑ) est modifiée dans une commande de pression en tant que paramètre de commande en changeant le paramètre de fonctionnement de la pompe en tant que paramètre manipulée dans le sens de la pression de rétroaction attendue (P_{E}).

7. Procédé selon l'une des revendications précédentes, **caractérisé en ce que** le chauffage de véhicule (10) comprend un capteur de température de gaz d'échappement (40) pour fournir des informations sur la température des gaz d'échappement, et **en ce qu'**une température de référence de gaz d'échappement (T) et une pression de rétroaction de référence (D) sont déterminées en association avec un état de fonctionnement de rétroaction de référence, et **en ce que** l'étape c) est exécutée si la température des gaz d'échappement détectée et la pression de rétroaction détectée s'écartent de manière prédéfinie de la température de référence de gaz d'échappement (T) et de la pression de rétroaction de référence (D) dans le cas d'un état de fonctionnement de rétroaction de référence réglé.

8. Procédé selon la revendication 7, **caractérisé en ce que** l'étape c) est effectuée si la température des gaz d'échappement détectée est inférieure à la température des gaz d'échappement de référence (T) et si la pression de rétroaction détectée est inférieure à la pression de rétroaction de référence (D).
